# EUROPEAN PATENT SPECIFICATION

(11) **EP 2 580 917 B1**
(45) Date of publication and mention of the grant of the patent: **24.12.2014**
(21) Application number: 11725092.8
(22) Date of filing: 14.06.2011
(51) Int. Cl.: H04N 21/44, H04N 21/438

(54) **Receiver and method at the receiver for enabling channel change with a single decoder**
Empfänger und Verfahren an dem Empfänger zur Ermöglichung des Kanalwechsels mit einem einzigen Decodierer
Récepteur et procédé dans le récepteur pour permettre le changement de canal avec un seul décodeur

(30) Priority: 17.08.2010 EP 10173106; 14.06.2010 EP 10305633
(43) Date of publication of application: 17.04.2013
(73) Proprietor: Thomson Licensing, 92130 Issy-les-Moulineaux (FR)
(72) Inventor: GAUTIER, Eric, F-35576 Cesson Sevigne (FR); LAURENT, Anthony, F-35576 Cesson Sevigne (FR); HOWSON, Christopher, F-35576 Cesson Sevigne (FR)
(74) Representative: Perrot, Sébastien
(86) International application number: PCT/EP2011/059861
(87) International publication number: WO 2011/157718

(56) References cited:
- WO-A1-2004/114668
- DVB ORGANIZATION: "IPI2847_Companion Stream FCC Draft Text.doc", DVB, DIGITAL VIDEO BROADCASTING, C/O EBU - 17A ANCIENNE ROUTE - CH-1218 GRAND SACONNEX, GENEVA - SWITZERLAND, 4 December 2009 (2009-12-04), XP017810892,

## Description

### FIELD OF THE INVENTION

The present invention relates generally to channel change in digital television and in particular to a mechanism at a digital television receiver to enable channel change with a single decoder.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Changes in Television broadcast technologies have lead to a longer channel change time. With analogical broadcast television, channel change was immediate. With digital television, channel change requires more time. This is illustrated as follows. Video distribution through broadband networks uses standard compression systems such as MPEG-2 or JVT/H.264/MPEG AVC. MPEG standards define the Group of Pictures (GoP). The GoP defines successive pictures sequence I, P, B, noted hereinbelow pictures or frames. These pictures are defined in MPEG standards. The I picture is encoded without any reference to the other pictures. The P picture refers to the previous I or P pictures. The B picture refers to the previous and following I or P pictures. When a receiver receives a new program, it waits for the reception of an I picture to start decoding the program. A delay appears between the reception of the stream and the rendering of the stream on a video screen.

Some mechanisms are used to reduce the digital television bandwidth. They use less and less I pictures. The decoder requires then more time to find and decode an I picture. This can take up to half a second. Moreover, with television transport over the Internet Protocol networks, an additional buffer is needed at the decoder to compensate the network delivery unreliability. This increases the time between the reception of the program and the transmission of the television stream to the decoder. It can require more than two seconds between the reception and the rendering of the new program picture on the screen.

Systems exist to improve the decoding time, by adding an additional stream whose structure is such that a picture is more rapidly found to be able to display it. This is what is defined in for example the patent application WO2005112465A1. A "tune-in" companion service is sent along with an original service. This tune-in companion service helps the receiver during the channel change process to retrieve and display the new service more rapidly. With this solution the service is encoded and streamed in its original format, plus encoded and streamed in a "tune-in" format. The parameters of the tune-in companion service can be various, depending on available bandwidth for this tune-in companion service, and channel change time targeted improvement. A tune-in companion service can result in an earlier display compared to the normal Live Media Broadcast (LMB) service. This is achieved by generating an encoded video stream for this tune-in companion service that can have the following characteristics:
- a higher frequency of I picture by means of a smaller GOP size for the video stream. It is then faster to find an I picture in the tune-in companion video stream;
- a lower video buffering time. It is faster to fill in the video buffer for the tune-in companion video stream.

A GoP is either open or closed. An open GoP is one that uses pictures from the previous GoP. A closed GoP is one that doesn't use pictures from the previous GoP. Because of the temporal dependencies between B- and P-frame the receiver decodes incoming pictures in an order that is different from the display order.

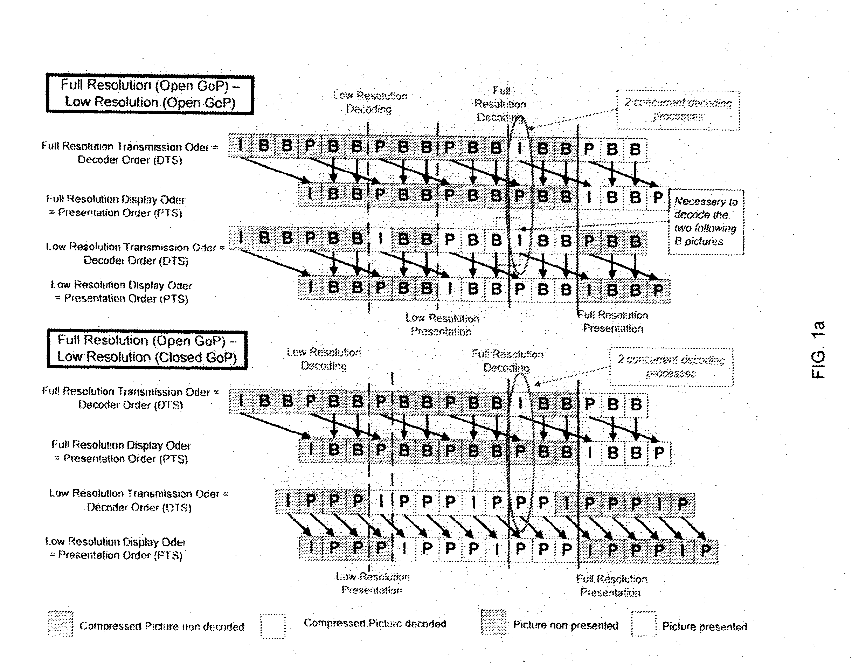

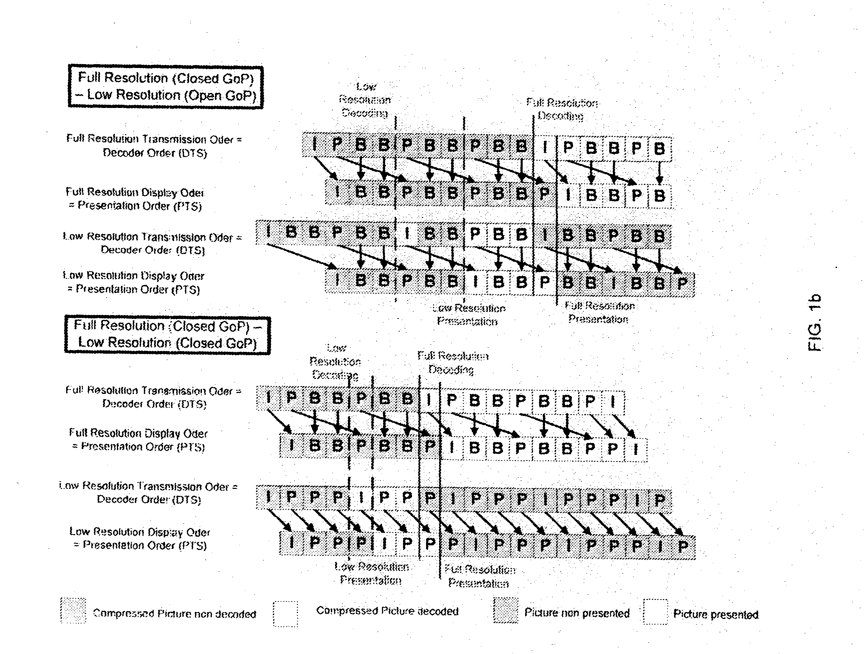

Figure 1 illustrates four examples of pictures decoding according to four different configurations. Each example illustrates a transmission order and display order for a full resolution stream and a low resolution stream. The transmission order corresponds to the decoding time stamp. The display order corresponds to the presentation time stamp. This illustrates the decoding and presentation steps, after a channel change action, just after the receiver buffering stage. The I P B pictures represented in grey are the ones that are not decoded. The IPB pictures represented in white are decoded.

The last two examples illustrate a low resolution stream with a closed GoP. It requires only one decoding process. It is mainly due to the fact that when the GoP is open the delay between the decoding time slot of a picture and its presentation is larger than in a closed GoP. The first two examples illustrate a full resolution stream encoded with an open GoP. The decoder concurrently decodes the full and low resolution streams. Indeed each time it is necessary to decode a picture of the full resolution stream there are yet another picture(s) to decode in the low resolution stream to be sure the switch between the two streams is seamless.

### SUMMARY OF THE INVENTION

The present invention attempts to remedy at least some of the concerns connected with the receiver in the prior art, by providing a mechanism at a digital television receiver to enable channel change with a single decoder.

The invention is defined by the claims.

The receiver performs a swooth switching between the first and the second streams with a unique decoder. The controller selects the proper picture to decode.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 illustrates the decoding of I, P and B frames according to the prior art;
- Figure 2 is a block diagram of a system according to the embodiments;
- Figure 3 is a block diagram of a receiver according to the embodiments;
- Figure 4 illustrates a channel change process with one stream;
- Figure 5 illustrates a first channel change process with a full resolution stream and a low resolution stream;
- Figure 6 illustrates a second channel change process with a full resolution stream and a low resolution stream;
- Figure 7 illustrates decoding arbitration after a channel change at the receiver;
- Figure 8 illustrates the decoding of I, P and B frames according to the embodiment; and
- Figure 9 is another illustration of the decoding of I, P and B frames according to the embodiment.

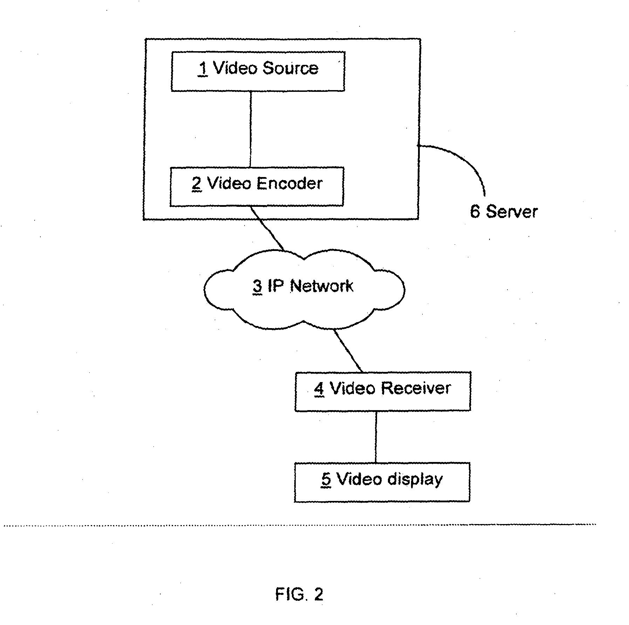

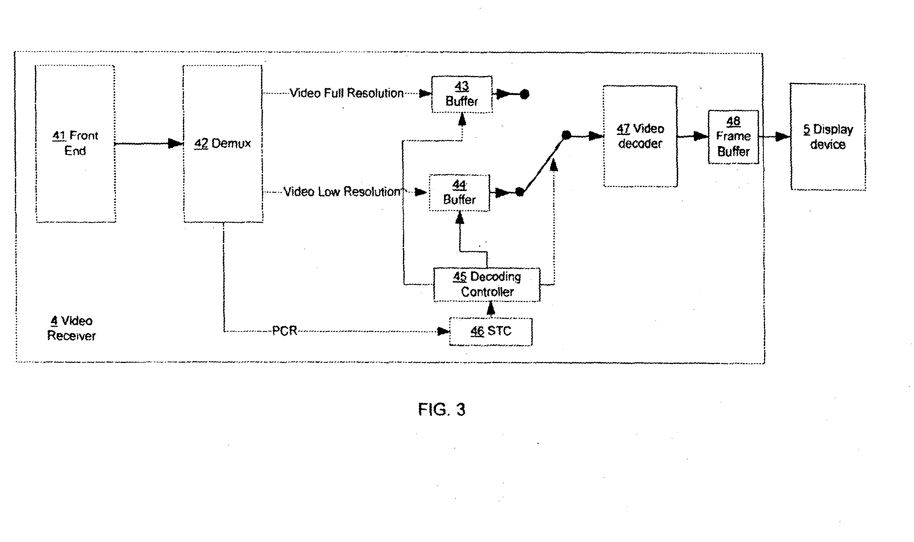

In Figure 2 and 3, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of digital television in the scope of MPEG compression, but the invention is not limited to this particular environment and may be applied within other frameworks where content may be compressed in a high and low resolution.

The system according to the embodiment is illustrated in figure 2. A server 6 receives a video source 1 and encodes the video source with a video encoder 2. It is encoded into a full resolution stream and a low resolution stream. The streams can be received at a video receiver 4 through an Internet Protocol network 3. The video receiver 4 can decode the stream. When decoded a stream is sent to a video display that displays the video.

A video receiver 4 according to the embodiment is illustrated in figure 3. A front end 41 selects a signal received at a given frequency and transmits this signal in baseband to a demultiplexer 42 which extracts there from a digital data stream, for example according to the MPEG standard. This data stream is then translated into a video signal and into an audio signal by an audio/video decoder 47. As illustrated the demultiplexer extracts a video in a full resolution that is sent to a first buffer 43. It also extracts a video in a low resolution that is sent to a second buffer 44. The decoder 47 may access either the first or the second buffer. This is controlled and managed by a decoding controller 45. The decoding controller is adapted to carrying out the arbitration between the buffered decompressed pictures to be decoded, according to the compressed pictures type (I, P, B), the decoding time stamps (DTS) and presentation time stamps (PTS) of the access unit and the System Time Clock (STC) slave 46 to the Program Clock Reference (PCR). The decoding controller reads these values in the compressed pictures header. It selects a picture to decode according to the method described herein below. It also selects the buffer that is made accessible to the decoder. The pictures that are not decoded are removed from the buffer. The selected picture is then sent to the video decoder. When decoded, the video is buffered 48 before being sent to a display device 5. According to the embodiment, the receiver comprises a decoder. In an alternative, the decoder could be comprised in another device. The receiver then arbitrates in a same manner the pictures that are transmitted to the decoder for being decoded and transmitted to the display.

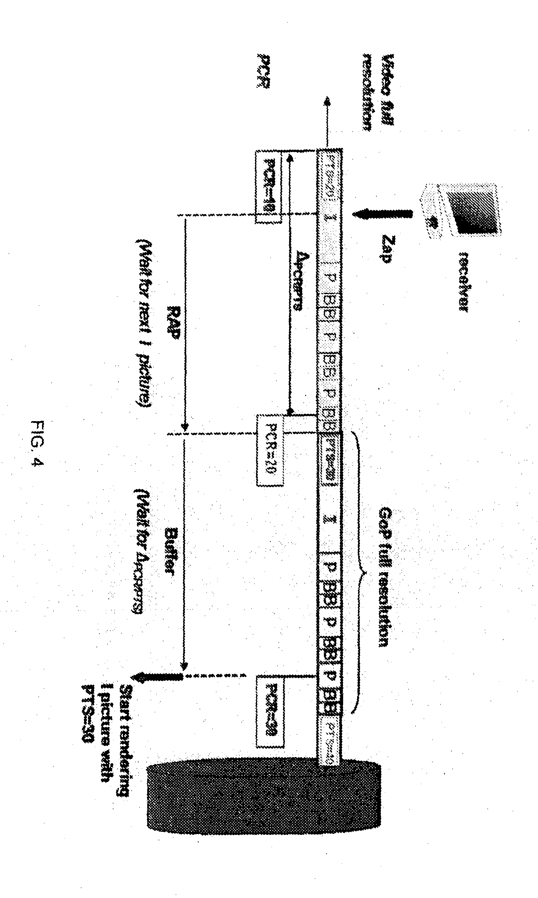

Figure 4 depicts a channel change process illustrating the waiting time before an I-frame is received and the video decoder buffer delay. The receiver device starts receiving data for the new service from the "Zap" arrow point, which is around the middle of a compressed "I" picture. The decoder buffer delay for a given access unit is noted Δ_{PCR/PTS}. This is the delay of the PCR at the beginning of the decoder buffer loading of an access unit with respect to its Presentation Time Stamp (PTS) which represents the time that decoded access unit will be rendered. Here, the compressed "I" picture with PTS=20 is sent before the PCR=20 packet, and their relative time difference is Δ_{PCR/PTS}.

The decoder buffer delay Δ_{PCR/PTS} is implicitly related to the end-to-end delay, from the input of the encoder to the output or presentation of the decoder, which is defined in the standard ISO/IEC 13818-1 amendment 5 dated 2005 on "Information technology - Generic coding of moving pictures and associated audio information: Systems", noted ISO/IEC 13818-1 hereinafter. It is a constant value determined by the encoding process. The encoder ensures that a given access unit of the stream can be decoded with a decoder buffer size fixed to Δ_{PCR/PTS}. In other words it ensures that no access unit will buffer more than Δ_{PCR/PTS}. The Δ_{PCR/PTS} is generally not longer than the GoP length.

In figure 4, when the receiver changes channel, it first waits for the Waiting time corresponding to the next compressed "I" picture. Then when this "I" picture is received, it checks the corresponding PTS (PTS=30) and has to wait for the decoder "Buffer" time which corresponds to a PCR=30, before starting the picture rendering process.

The tune-in companion stream is used to improve the waiting time by configuring a shorter GoP. In order to maintain the synchronization of both services presentation, the encoding process configures the GoPs of the two streams in such a way that they remain aligned with respect to the PCR. Moreover the encoding process of the two services is based on the same constant end-to-end delay, which means that the delay from the input to the encoder to the presentation from the decoder of the two services is the same.

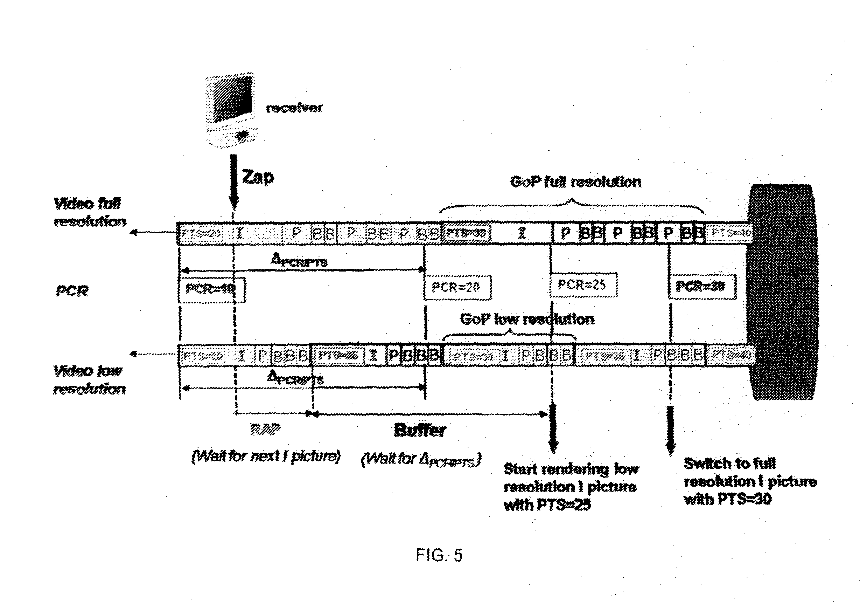

Figure 5 depicts an original LMB service with an additional "tune-in" companion service, carried respectively in the full and low resolution streams. In this example the tune-in companion service has a GoP length which is half the length of the full resolution stream.

When the receiver changes or selects a channel, it waits for the Waiting time corresponding to the next compressed "I" picture, in both the full-resolution and the low-resolution streams. As indicated in figure 5 most of the time the first compressed "I" picture found is the low-resolution one. Then the buffer is filled normally until the rendering of the low resolution stream can start, the decoder "Buffer" time. This is indicated in figure 5 by the "Start rendering" arrow which indicates the rendering of low resolution compressed "I" picture with a PTS=25, carried out when PCR=25. Compared to figure 4, the waiting time has been reduced. Finally the "Switch" arrow at PCR=30 shows when the full resolution stream is ready to be presented; this is equivalent to the "Start rendering" arrow in figure 4. At this time the low-resolution video is no longer rendered. The companion stream can be disconnected from by the receiver. The full-resolution video is displayed. The channel change phase is finished.

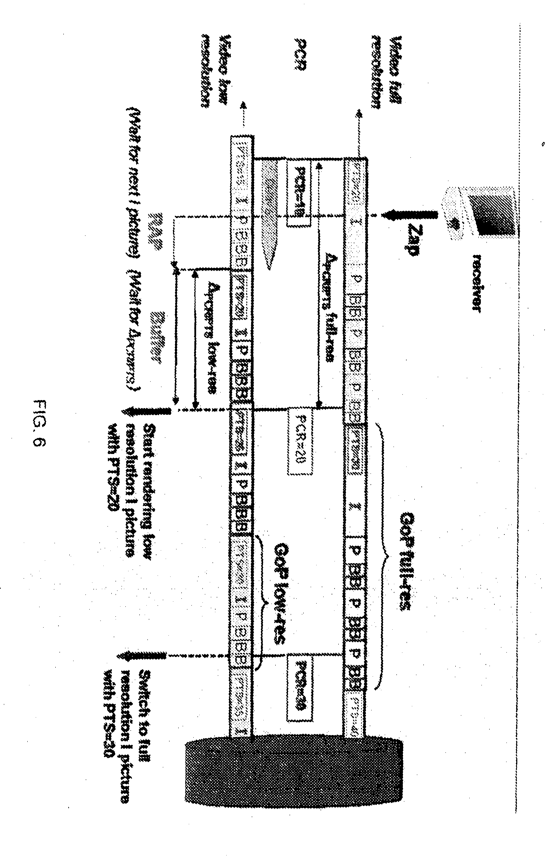

Figure 6 depicts the tune-in companion service and an original LMB service carried respectively in the low and full resolution streams. Each service has its own encoding constraints. The original LMB service is encoded with a constant end-to-end delay noted "end-to-end-delay-full-res" which leads for a given access unit to the decoder buffer delay "Δ_{PCR/PTS} full-res". The tune-in companion service is encoded with a shorter constant end-to-end delay "end-to-end-delay-low-res" which leads for a given access unit to the decoder buffer delay "Δ_{PCR/PTS} low-res".

In order to maintain synchronization during the presentation of both services, the tune-in companion service is delayed as compared to the original service before the encoding process. The value of the delay is equal to the difference between the values of the end-to-end delay used during the encoding process of each of the two streams: "end-to-end-delay-full-res"-"end-to-end-delay-low-res". Indeed it is known from ISO/IEC 13818-1 that the end-to-end delay is a constant value. So when the low resolution stream is encoded with a lower end-to-end delay compared to the full resolution stream, the pictures in the low resolution stream are presented before the corresponding pictures of the full resolution stream. Then to synchronize the presentation of the two streams it is necessary to delay the low resolution stream compared to the full resolution stream. Delaying it before the encoding process allows encoding the two streams with the same System Time Clock (STC), keeping the PCR alignment between the full resolution and the delayed low resolution streams.

In figure 6, the compressed "I" picture with PTS=20 of the two streams are not transported in a synchronized way anymore. After being buffered in the video decoders they resynchronize themselves because the buffer decoder delays configured by the encoder are such as the difference between the end-to-end delays used to encode them equals the transport delay.

When the receiver changes or selects a channel, it first waits for the Waiting time corresponding to the next compressed "I" picture that is found in the low resolution stream. Then it fills the video decoder buffer and waits for the "Δ_{PCR/PTS} low-res" decoder Buffer time that is shorter than the "Δ_{PCR/PTS} full-res". This is indicated in figure 6 by the "Start rendering" arrow which indicates the rendering of the low resolution compressed "I" picture with a PTS=20, carried out at PCR=20. Compared to figure 5, the Buffer time has been reduced. Finally the "Switch" arrow at PCR=30 is the same as in figure 4. The companion tune-in service is presented during a longer time to the end-user: this is because the presentation of the new service is much faster.

The decoding controller performs the selection between the full resolution stream and the low resolution stream as illustrated in figures 5 and 6. The full and low resolution streams are stored in respective buffers. The controller selects the appropriated picture to be decoded so that this picture is sent to the decoder.

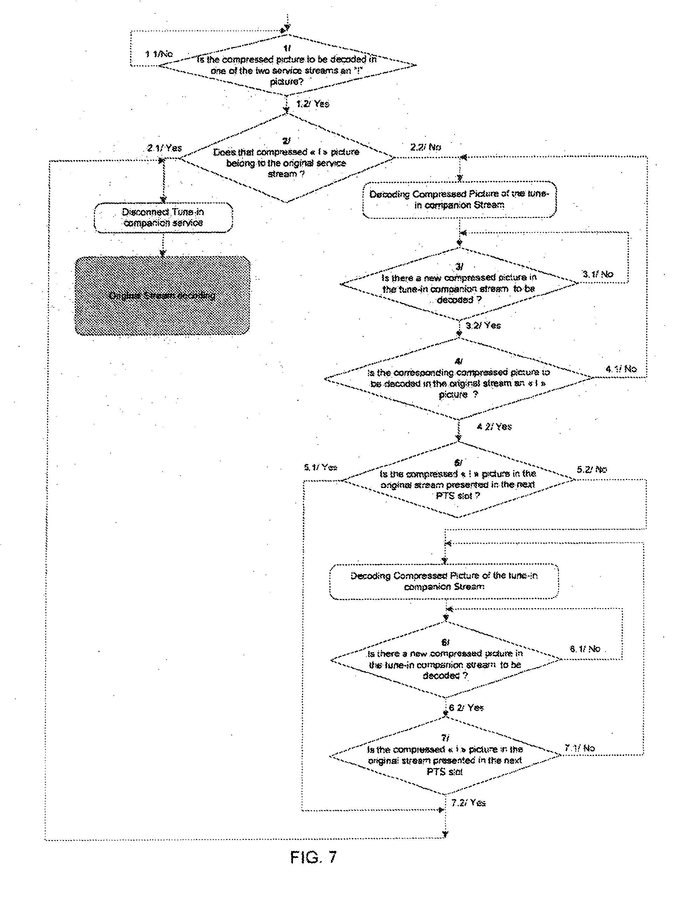

A decoding arbitration strategy according to the embodiment is illustrated in figure 7. After a channel change request, the receiver stops receiving the old service and performs the necessary actions to receive and buffer the new original service, the one encoded in full resolution, and its tune-in companion service, the one encoded in low resolution.

Then the receiver waits for a compressed "I" picture to be decoded in both services streams (step 1.1).

If the first compressed "I" picture to be decoded (step 1.2) belongs to the original service stream (step 2.1), the receiver stops to process the tune-in companion service, processes the original service and the channel change is effective.

If the first compressed "I" picture to be decoded (step 1.2) belongs to the companion service stream (step 2.2) the receiver begins to decode that picture and continues to process that stream until a compressed "I" picture in the original stream has to be decoded (step 4.2).

If the compressed "I" picture of the original stream has to be presented in the next time slot (PTS =DTS+1/frame rate) (step 5.1) then the original stream is processed.

Otherwise (step 5.2) the decoding of this compressed "I" picture is delayed up to the time slot (1/frame rate) just before their presentation and during this time the tune-in companion service is decoded.

When arbitration between compressed pictures of the two streams to be decoded is necessary and the compressed picture of the original service is chosen, the corresponding picture of the tune-in service is deleted from its buffer. In this case the presented picture in a time slot where no decode picture is available leads to the presentation of the previous decoded picture.

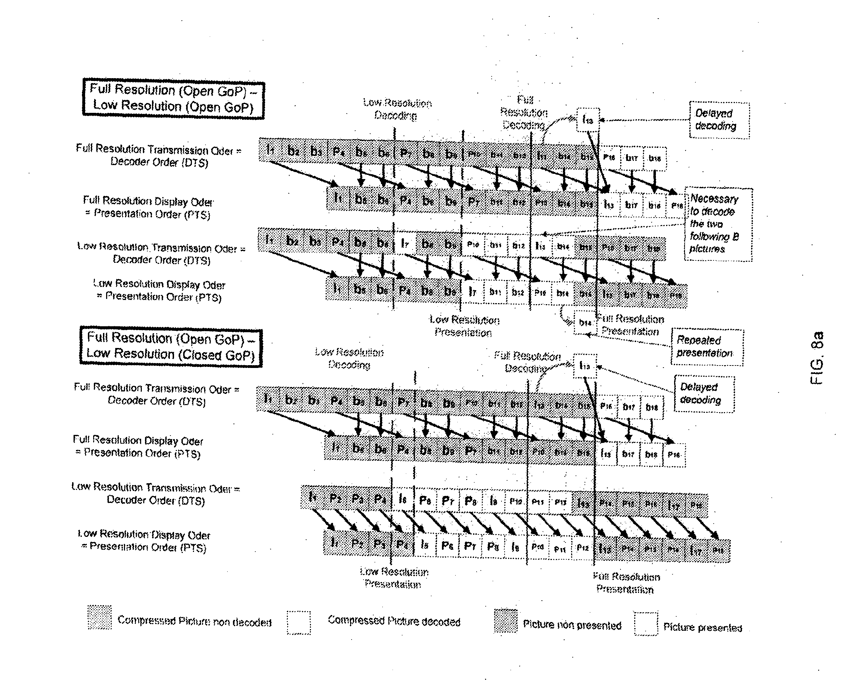

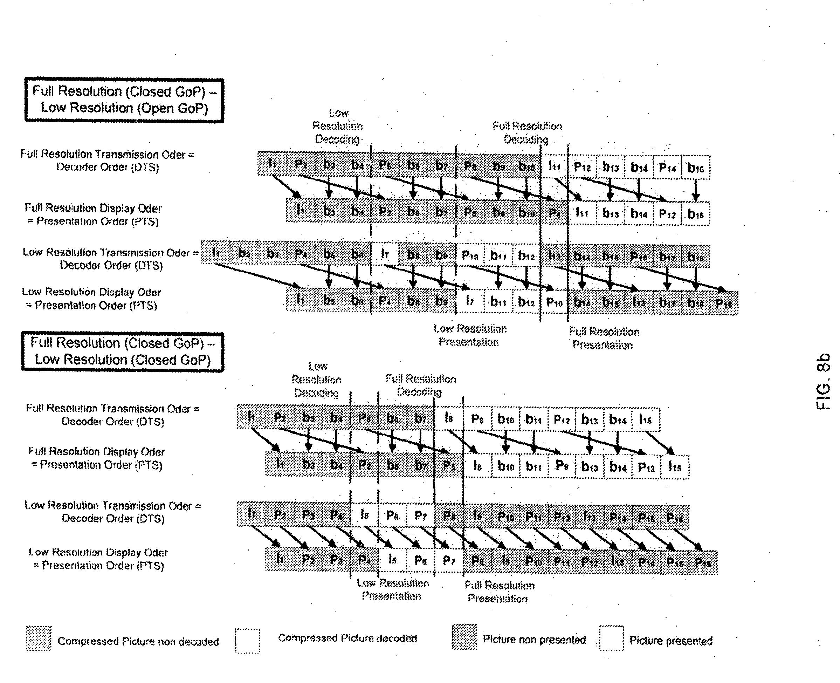

Figure 8 illustrates the way the decoding conflicts are managed in the receiver of the embodiment. It shows the same streams as the one indicated in figure 1. The decoding process is different, which conducts to a different display order. This figure 8 also shows that when any decoded picture is available in a time slot of the tune-in companion stream then the strategy to present the previous decoded picture is adopted.

In the last two examples, there is no conflict when switching from the low resolution stream to the full resolution one. This is due to the fact that the first I-frame of the full resolution stream is presented in the time slot following the one in which this frame is decoded. And, the frame of the low resolution stream to be presented during the time slot the decoder decodes the first I-frame of the full resolution stream is already decoded. In the third example, in the time slot the decoder decodes the high resolution "111" frame, it is presenting the low resolution "P10" frame which is already decoded. After this last frame, the decoder presents the high resolution "111" frame. Consequently the switch between both streams is seamless.

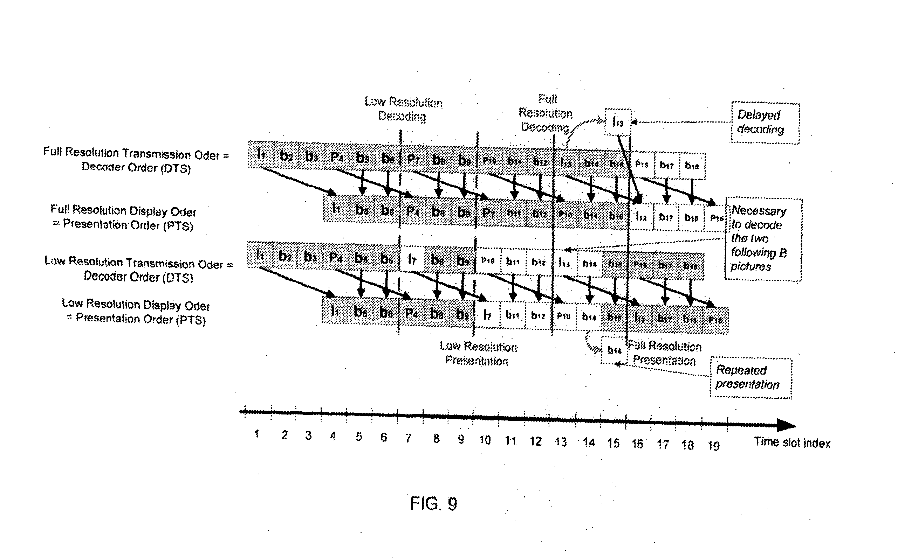

In the first two examples, the switch is achieved seamlessly with the decoder. The first example is further illustrated in figure 9 that also shows the time slots 1 to 19. The user performs a channel change after the high resolution" l1" frame was delivered but before the low resolution "17" frame was received by the decoder. The decoder decodes respectively the low resolution frames "17", "P10", "b11" and "b12" during the time slots 7, 10, 11 and 12 and presents them respectively during the time slots 10, 13, 11 and 12.

Then the decoder receives the high resolution I-frame "113" that should be decoded during time slot 13 as well as the low resolution I-frame "113". Only one of them is decoded during this time slot. The decoding controller checks if the high resolution "113" frame should be presented during the next time slot, i.e. time slot 14. As "113" should be presented during time slot 16 and not during time slot 14, the decoding controller makes the decoder decoding the low resolution "113" frame. It also delays the high resolution "113" frame decoding. During this time slot the decoder presents the low resolution "P10" frame.

When the time slot 14 starts, the decoding controller checks if the high resolution "113" frame should be presented during the next time slot, i.e. time slot 15. As it should not be presented, the decoding controller makes the decoder decoding the low resolution "b14" frame and delays the high resolution "113" frame decoding. During this time slot the decoder presents the low resolution "b14" frame.

When the time slot 15 starts, the decoding controller checks if the high resolution "113" frame should be presented during the next time slot, i.e. time slot 16. As it should be presented, the decoding controller makes the decoder decoding this frame and stops making decoding the low resolution stream. During this time slot, the decoder has no decoded frame to present as both low resolution and high resolution "b15" frames were not decoded. The decoder manages this transition by repeating during a second time slot the low resolution "b14" frame. The end user sees the same frame during 2 frame periods. Of course, if the decoder stops decoding the low resolution stream as soon as the high resolution I-frame should be decoded, during time slot 13 in figure 9, the same low resolution "P10" frame is displayed during three frame periods. Alternatively the transition is not managed by the decoder but by the controller. The controller indicates to the decoder that it should present the last decoded frame again.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A method for channel switching at a receiver device (4) comprising a decoder (47) adapted to decode only one image per time slot, said method comprising the steps of:
- switching to a channel transporting a program encoded into Groups of Pictures;
- receiving said program into a first stream and a second stream, the first stream being encoded with successive first Group of Pictures, first GoP, the second stream being encoded with successive second Group of Pictures, second GoP, each GoP starting with an Intra-frame picture, each one of said second GoP comprising a subset of the pictures of one of said first GoP;
- sending a picture among the first stream and the second stream to the decoder; so that,
- if the first received Intra-frame picture belongs to the second stream, sending said second stream pictures until an Intra-frame picture belonging to the first stream is received;
**characterized in that** the method comprises step of:
- on reception of an Intra-frame picture belonging to the first stream, delaying the decoding of said first stream Intra-frame picture to the time slot before it is planned to be displayed.

2. Method according to claim 1, comprising the steps of, if the first received Intra-frame picture belongs to the first stream, sending said first stream pictures and releasing reception of said second stream.

3. Method according to claim 1 or 2, comprising the steps of, repeating the last decoded second stream picture during the time slot where the first stream Intra-frame picture is decoded.

4. Method according to any one of the preceding claims, comprising the step of, prior to sending the picture to the decoder, selecting said picture among the first stream and the second stream.

5. A receiver (4) comprising:
- a video decoder (47) adapted to decode only one image per time slot;
- an interface (41, 42) for receiving a first stream being encoded with successive first Groups of Pictures, first GoP, and a second stream being encoded with successive second Groups of Pictures, second GoP, each GoP starting with an Intra-frame picture, each one of said second GoP comprising a subset of the pictures of one of said first GoP; and
- a controller (45) adapted to send a picture, among the first stream and the second stream, to said video decoder; so that if the first received Intra-frame picture belongs to the second stream, said controller sends said second stream pictures until an Intra-frame picture belonging to the first stream is received; and
**characterized in that** said controller (45) is further adapted to, on reception of an Intra-frame picture belonging to the first stream, delay the decoding of said first stream Intra-frame picture to the time slot before it is planned to be displayed.

6. A receiver according to claim 5, said controller (45) being adapted to select a picture, among the first stream and the second stream.

## Patentansprüche

1. Verfahren für die Kanalumschaltung in einer Empfängervorrichtung (4), die einen Decodierer (47) umfasst, der dafür ausgelegt ist, nur ein Bild pro Zeitschlitz zu decodieren, wobei das Verfahren die folgenden Schritte umfasst:
- Umschalten auf einen Kanal, der ein in Bildsequenzen codiertes Programm transportiert;
- Empfangen des Programms in einem ersten Datenstrom und in einem zweiten Datenstrom, wobei der erste Datenstrom mit aufeinanderfolgenden ersten Bildsequenzen, ersten GoP, codiert ist, wobei der zweite Datenstrom mit aufeinanderfolgenden zweiten Bildsequenzen, zweiten GoP, codiert ist, wobei jede GoP mit einem Intra-Einzelbild beginnt, wobei eine der zweiten GoP eine Teilmenge der Bilder einer der ersten GoP umfasst;
- Senden eines Bilds aus dem ersten Datenstrom und aus dem zweiten Datenstrom an den Decodierer; sodass
- Bilder des zweiten Datenstroms gesendet werden, bis ein Intra-Einzelbild, das zu dem ersten Datenstrom gehört, empfangen wird, falls das erste empfangene Intra-Einzelbild zu dem zweiten Datenstrom gehört;
**dadurch gekennzeichnet, dass** das Verfahren den folgenden Schritt umfasst:
- Verzögern des Decodierens des Intra-Einzelbilds des ersten Datenstroms bis zu dem Zeitschlitz, bevor geplant ist es anzuzeigen, bei Empfang eines Intra-Einzelbilds, das zu dem ersten Datenstrom gehört.

2. Verfahren nach Anspruch 1, das die Schritte des Sendens von Bildern des ersten Datenstroms und des Freigebens des Empfangs des zweiten Datenstroms, falls das erste empfangene Intra-Einzelbild zu dem ersten Datenstrom gehört, umfasst.

3. Verfahren nach Anspruch 1 oder 2, das die Schritte des Wiederholens des zuletzt decodierten Bilds des zweiten Datenstroms während des Zeitschlitzes, in dem das Intra-Einzelbild des ersten Datenstroms decodiert wird, umfasst.

4. Verfahren nach einem der vorhergehenden Ansprüche, das den Schritt des Auswählens des Bilds aus dem ersten Datenstrom und aus dem zweiten Datenstrom vor dem Senden des Bilds an den Decodierer umfasst.

5. Empfänger (4), der umfasst:
- einen Videodecodierer (47), der dafür ausgelegt ist, nur ein Bild pro Zeitschlitz zu decodieren;
- eine Schnittstelle (41, 42) zum Empfangen eines ersten Datenstroms, der mit aufeinanderfolgenden ersten Bildsequenzen, ersten GoP, codiert ist, und eines zweiten Datenstroms, der mit aufeinanderfolgenden zweiten Bildsequenzen, zweiten GoP, codiert ist, wobei jede GoP mit einem Intra-Einzelbild beginnt, wobei jede der zweiten GoP eine Teilmenge der Bilder einer der ersten GoP umfasst; und
- einen Controller (45), der dafür ausgelegt ist, ein Bild aus dem ersten Datenstrom und aus dem zweiten Datenstrom an den Videodecodierer zu senden; sodass der Controller die Bilder des zweiten Datenstroms sendet, bis ein zu dem ersten Datenstrom gehörendes Intra-Einzelbild empfangen wird, falls das erste empfangene Intra-Einzelbild zu dem zweiten Datenstrom gehört; und
**dadurch gekennzeichnet, dass** der Controller (45) ferner dafür ausgelegt ist, beim Empfang eines Intra-Einzelbilds, das zu dem ersten Datenstrom gehört, das Decodieren des Intra-Einzelbilds des ersten Datenstroms bis zu dem Zeitschlitz, bevor geplant ist es anzuzeigen, zu verzögern.

6. Empfänger nach Anspruch 5, wobei der Controller (45) dafür ausgelegt ist, ein Bild aus dem ersten Datenstrom und aus dem zweiten Datenstrom auszuwählen.

## Revendications

1. Un procédé pour la commutation de canal dans un dispositif récepteur (4) comprenant un décodeur (47) adapté pour décoder uniquement une image par intervalle de temps, ledit procédé comprenant les étapes suivantes :
- commutation vers un canal transportant un programme codé en des groupes d'images (GoP) ;
- réception dudit programme dans un premier flux et dans un second flux, le premier flux étant codé avec le premier groupes d'images successif, premier GoP, le second flux étant codé avec le second groupe d'images successif, second GoP, chaque GoP démarrant avec une image intra-trame, chacun desdits seconds GoP comprenant un sous-ensemble des images de l'un desdits premiers GoP ;
- envoi d'une image parmi celles du premier flux et celles du second flux vers le décodeur ; afin que
- si la première image intra-trame reçue appartient au second flux, envoi des images dudit second flux jusqu'à ce qu'une image intra-trame appartenant au premier flux soit reçue ;
**caractérisé en ce que** le procédé comprend l'étape suivante :
- à réception d'une image intra-trame appartenant au premier flux, retardement du décodage de l'image intra-trame dudit premier flux dans l'intervalle de temps avant qu'elle ne soit programmée pour affichage.

2. Procédé selon la revendication 1, comprenant les étapes suivantes, si la première image intra-trame reçue appartient au premier flux, d'envoi des images dudit premier flux et de déverrouillage de la réception dudit second flux.

3. Procédé selon la revendication 1 ou 2, comprenant les étapes de, répétition de la dernière image décodée du second flux pendant l'intervalle de temps où l'image intra-trame du premier flux est décodée.

4. Procédé selon l'une quelconque des revendications précédentes, comprenant l'étape de, avant d'envoyer l'image au décodeur, sélection de ladite image dans le premier flux et le second flux.

5. Un récepteur (4) comprenant :
- un décodeur vidéo (47) adapté pour décoder uniquement une image par intervalle de temps ;
- une interface (41, 42) pour la réception d'un premier flux étant codé avec le premier groupe d'images successif, premier GoP, et un second flux étant codé avec le second groupe d'images successif, second GoP, chaque GoP démarrant avec une image intra-trame, chacun desdits seconds GoP comprenant un sous-ensemble des images de l'un desdits premiers GoP ; et
- un contrôleur (45) adapté pour envoyer une image, parmi celles du premier flux et celles du second flux, audit décodeur vidéo ; de sorte que, si la première image intra-trame reçue appartient au second flux, ledit contrôleur envoie lesdites images de second flux jusqu'à ce qu'une image intra-trame appartenant au premier flux soit reçue ; et **caractérisé en ce que** ledit contrôleur (45) est adapté en outre à, à réception d'une image intra-trame appartenant au premier flux, retarder le décodage de l'image intra-trame dudit premier flux dans l'intervalle de temps avant qu'elle ne soit programmée pour affichage.

6. Un récepteur selon la revendication 5, ledit contrôleur (45) étant adapté pour sélectionner une image, parmi le premier flux et le second flux.
